# EUROPÄISCHE PATENTSCHRIFT

(11) **EP 3 744 551 B1**
(45) Veröffentlichungstag und Bekanntmachung des Hinweises auf die Patenterteilung: **13.04.2022**
(21) Anmeldenummer: 19177664.0
(22) Anmeldetag: 31.05.2019
(51) Int. Cl.: B60K 15/03, B29C 49/54, B29C 49/42

(54) **KRAFTSTOFFBEHÄLTER MIT VERSTEIFUNGSEINRICHTUNG**
FUEL TANK WITH REINFORCEMENT DEVICE
RÉSERVOIR DE CARBURANT POURVU DE DISPOSITIF DE RENFORCEMENT

(43) Veröffentlichungstag der Anmeldung: 02.12.2020
(73) Patentinhaber: TI Automotive Technology Center GmbH, 76437 Rastatt (DE)
(72) Erfinder: BOECKER, Albert J., 76275 Ettlingen (DE); SCHWAGER, Dennis, 76187 Karlsruhe (DE); MICHAELIS, Gerrit, 76448 Durmersheim (DE)
(74) Vertreter: Gauss, Nikolai

(56) Entgegenhaltungen:
- EP-A1- 2 537 696
- EP-A2- 2 163 694
- DE-A1-102013 003 247
- DE-A1-102015 221 378
- DE-T2- 69 816 901
- US-A1- 2011 139 793

## Beschreibung

Die Erfindung betrifft einen Kraftstoffbehälter mit einer mindestens zwei einander gegenüberliegende Wandpartien aufweisenden Behälterwandung und einer zwischen den zwei einander gegenüberliegenden Wandpartien angeordneten Versteifungseinrichtung. Die Erfindung betrifft weiterhin ein Verfahren zur Herstellung eines derartigen Kraftstoffbehälters.

Wie bei vielen anderen Bauteilen von Kraftfahrzeugen besteht auch bei Kraftstoffbehältern zunehmend das Bestreben, bei Beibehaltung der mechanischen Belastbarkeit ein möglichst geringes Gesamtgewicht zu erreichen. Bei Kraftstoffbehältern, die betriebsbedingt einem erhöhten Innendruck ausgesetzt sein können, werden zur Formstabilisierung der Behälterhülle Versteifungseinrichtungen eingesetzt, die beispielsweise durch auf Druck und/oder Zug belastbare Versteifungskörper obere und untere Wandungspartien des Behälters aneinander koppeln. Insbesondere werden derartige Versteifungskörper im Bereich eines in dem Behälter angeordneten Kraftstofffördermoduls angeordnet, da ein Innendruck auf dessen verhältnismäßig große Projektionsfläche zu hohen Kräften auf die Behälterwandung im Bereich des Moduls führt. Bekannte Versteifungseinrichtungen weisen jedoch nicht zuletzt bedingt durch die Befestigungsart an der Behälterwandung ein vergleichsweise großes Volumen auf, so dass sie das Nutzvolumen des Behälters nachteilhaft vermindern. Dazu kommen Platzprobleme bei der Anordnung im Bereich des Kraftstofffördermoduls.

Eine Versteifungseinrichtung für einen Kraftstoffbehälter ist aus der DE 10 2015 221 378 A1 bekannt. Diese Versteifungseinrichtung ist jedoch als auf zwei Hälften zusammengesetztes, vergleichsweise voluminöses Rohrelement ausgebildet.

Ausgehend davon besteht die Aufgabe der Erfindung darin, eine möglichst platzsparende Versteifungseinrichtung für den Kraftstoffbehälter zu entwickeln.

Zur Lösung dieser Aufgabe werden die in den Patentansprüchen 1 und 14 angegebenen Merkmalskombinationen vorgeschlagen. Vorteilhafte Ausgestaltungen und Weiterbildungen der Erfindung ergeben sich aus den abhängigen Ansprüchen.

Gemäß der Erfindung ist vorgesehen, dass die Versteifungseinrichtung mindestens eine Verbindungsstrebe aufweist, die endseitig jeweils eine Profilpartie aufweist, die mit je einer komplementären Profilpartie an den zwei einander gegenüberliegenden Wandpartien der Behälterwandung derart zugfest im Eingriff stehen, dass die Verbindungsstrebe auf die Behälterwandung wirkende Druckkräfte aufnimmt, wobei die komplementären Profilpartien der zwei gegenüberliegenden Wandpartien der Behälterwandung einen Hinterschnittbereich aufweisen und wobei Koppelpartien der Wandpartien eine Hinterschnittpartie aufweisen, derart dass die Profilpartien der mindestens einen Verbindungsstrebe quer zur Längserstreckung der Verbindungsstrebe auf die Hinterschnittpartien aufschiebbar sind. Die Hinterschnittpartie ist zweckmäßig bei einer Formung der einander gegenüberliegenden Wandpartien durch ein formgebendes Element von einer Behälteraußenseite her geschaffen. In der Regel wird die Behälterwandung aus einem thermoplastischen Kunststoff bestehen und das formgebende Element ist dann vorteilhaft ein Einlegeteil für eine Blasform zur Herstellung des Behälters, das bei einem Blasformen des Behälters überblasen wird. Gegenüber einem aus dem Stand der Technik auch bekannten Einschweißen von Versteifungselementen in den Behälter weist die Erfindung den Vorteil auf, das letzteres mechanisch weniger belastbar ist. Bei Belastung einer Verschweißung kann ein sogenannter Peel-Off-Effekt eintreten, bei dem die Schweißnaht zwischen dem Versteifungselement und der Behälterwandung aufgerissen wird. Zudem bestehen prozesstechnische Schwierigkeiten, da ein nachträgliches Einschweißen eines Versteifungselement in den fertigen Behälter aus Platzgründen schwierig oder je nach gewünschtem Einsatzort im Behälter unmöglich ist. Bei ähnlichem Materialaufwand wird durch die erfindungsgemäße Lösung im Vergleich zu einem Schweißprozess eine höhere Kraftaufnahmefähigkeit insbesondere im Zugbereich erreicht.

Bevorzugt weist das Einlegeteil eine flache Tellerpartie und eine sich normal zu der Tellerpartie erstreckende, im Querschnitt im Wesentlichen pilzförmige Profilformungspartie auf. Das Einlegeteil verbleibt nach der Behälterherstellung an der Behälterwandung. Durch die nach außen flache Tellerpartie steht das Einlegeteil nicht oder nur geringfügig über die Außenkontur des Behälters über. In Abhängigkeit von der Wandstärke der Behälterwandung weist die Profilformungspartie zur sicheren Ausbildung der Hinterschnittpartie im Innenraum des Behälters zweckmäßig eine Höhe zwischen 20 mm und 120 mm auf.

Zur Kopplung der Verbindungsstrebe mit der Behälterwandung weisen die endseitigen Profilpartien der mindestens einen Verbindungsstrebe in bevorzugter Ausgestaltung der Erfindung Führungselemente auf, die ein Aufschieben der Profilpartien auf die komplementären Profilpartien der einander gegenüberliegenden Wandpartien der Behälterwandung erleichtern.

Weiterhin können die endseitigen Profilpartien der mindestens einen Verbindungsstrebe vorteilhaft Anschlagelemente aufweisen, die ein Aufschieben der Profilpartien auf die komplementären Profilpartien der einander gegenüberliegenden Wandpartien der Behälterwandung einseitig begrenzen.

Um ein ungewolltes Lösen der Befestigung der Verbindungsstrebe von der Behälterwandung zu verhindern, ist in vorteilhafter Ausgestaltung der Erfindung vorgesehen, dass die endseitigen Profilpartien der mindestens einen Verbindungsstrebe ein vorzugsweise lösbares Sicherungselement aufweisen, das ein Entfernen der Profilpartien von den komplementären Profilpartien der einander gegenüberliegenden Wandpartien der Behälterwandung verhindert. Bevorzugt ist das Sicherungselement als Seitenpartien der Profilpartie übergreifender und auf diese aufrastbarer Sicherungsbügel ausgebildet. Der Sicherungsbügel kann einseitig über ein Kunststoffscharnier mit der Profilpartie verbunden sein, so dass er zusammen mit der Verbindungsstrebe in das Behälterinnere eingeführt werden kann und dann nach dem Aufschieben der Profilpartie auf die komplementäre Profilpartie in seine Sicherungsstellung geschwenkt wird.

Die mindestens eine Verbindungsstrebe soll einerseits ein geringes Volumen aufweisen, muss andererseits jedoch mechanisch hinreichend stabil sein, um auf die Behälterwandung von innen und außen wirkende Druckkräfte aufzunehmen. Bevorzugt weist die mindestens eine Verbindungsstrebe daher einen sich zwischen den endseitigen Profilpartien erstreckenden Flachkörper mit einer Wandstärke von 2 mm bis 20 mm auf, der zur weiteren Versteifung mit einer Mehrzahl von sich quer zu seiner Flachseite bis über die Profilpartien erstreckenden Versteifungsrippen versehen sein kann.

Für die Montage eines Kraftstofffördermoduls weist der Behälter generell eine Öffnung auf. Die komplementären Profilpartien sind bevorzugt in einem geringen Abstand von der Öffnung einerseits und von einem auf die gegenüberliegende Wandpartie projizierten Öffnungsumriss andererseits angeordnet. Durch die vergleichsweise kompakte Gestaltung der Verbindungsstrebe und der Profilpartie in der Behälterwandung lässt sich die mindestens eine Verbindungsstrebe näher als bei bisherigen Versteifungseinrichtungen an der Öffnung und dem Kraftstofffördermodul platzieren, was deren Aussteifungswirkung begünstigt. Bevorzugt beträgt der Abstand zwischen der mindestens einen Verbindungsstrebe und dem Kraftstofffördermodul weniger als 100 mm, vorzugsweise weniger als 50 mm. In der Regel werden zwei, drei oder sogar noch mehr derartiger Verbindungsstreben um das Kraftstofffördermodul herum in gleichen oder ungleichen Winkelabständen zueinander um die Öffnung herum angeordnet sind.

Das erfindungsgemäße Verfahren zur Herstellung eines Kraftstoffbehälters mit einer Versteifungseinrichtung der vorgenannten Art ist gekennzeichnet durch die folgenden Schritte:
- Formen des Behälters aus einem thermoplastischen Kunststoff in einer Blasform, wobei mindestens zwei Koppelpartien an einander gegenüberliegenden Wandpartien sowie eine Öffnung in einer der Wandpartien geschaffen werden,
- Entfernen des Behälters aus der Blasform,
- manuelles oder maschinelles Einführen mindestens einer Verbindungsstrebe über die Öffnung in einen Innenraum des Behälters, wobei die mindestens eine Verbindungsstrebe endseitig jeweils eine Profilpartie aufweist, die zugfest mit einer der Koppelpartien der Wandpartien koppelbar sind, und
- manuelles oder maschinelles Koppeln der Profilpartien der Verbindungsstrebe mit den Koppelpartien der Wandpartien, wobei die Koppelpartien der Wandpartien eine Hinterschnittpartie aufweisen und die Profilpartien der mindestens einen Verbindungsstrebe quer zur Längserstreckung der Verbindungsstrebe auf die Hinterschnittpartien aufgeschoben werden.

Im Folgenden wird die Erfindung anhand eines in der Zeichnung in schematischer Weise dargestellten Ausführungsbeispiels näher erläutert. Es zeigen
- Fig. 1a: bis c einen Querschnitt sowie Drauf- und Unteransichten eines Kraftstoffbehälters mit einer Versteifungseinrichtung;
- Fig. 2: einen Querschnitt der Befestigungsstelle einer Verbindungsstrebe an der Behälterwandung;
- Fig. 3: einen Querschnitt des Behälters im Bereich einer Behälteröffnung zur Erläuterung des Montagevorgangs der Verbindungsstrebe;
- Fig. 4a: und b zwei Varianten einer Befestigungssicherung der Verbindungsstrebe an der Behälterwandung;
- Fig. 5a: bis c Detailansichten einer Profilpartie der Verbindungsstrebe;
- Fig. 6a: bis c eine Variante eines Sicherungselements für die Verbindungsstrebe; und
- Fig. 7a: bis d verschiedene Ansichten eines Einlegeteils für eine Blasform zur Schaffung einer komplementären Profilpartie an der Behälterwandung.

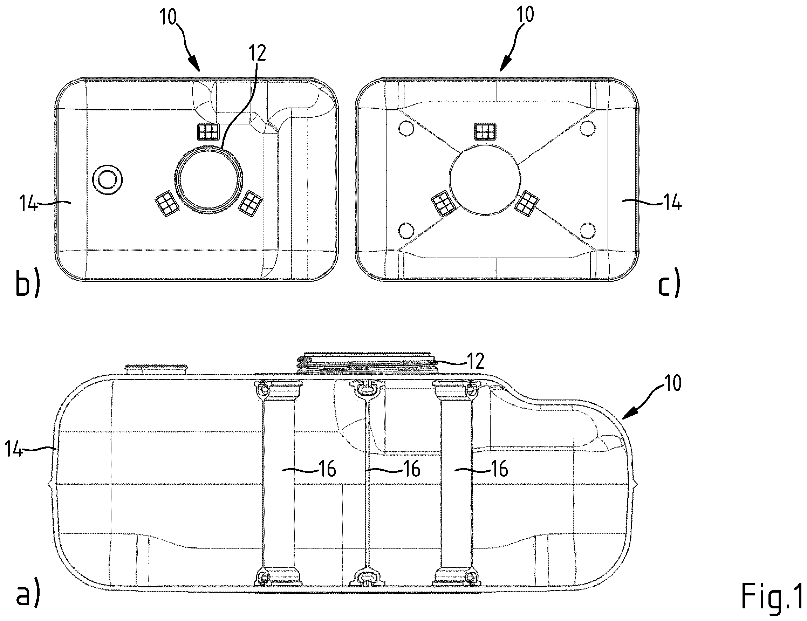

Der in Fig. 1 dargestellte Kraftstoffbehälter 10 weist eine in seiner Einbaulage oberseitig angeordnete Öffnung 12 in seiner Behälterwandung 14 auf, die vornehmlich zur Montage eines nicht näher dargestellten, im Wesentlichen topfartigen Kraftstofffördermoduls bestimmt ist. Um die Mantelfläche der Zylinderprojektion der Öffnung 12 auf den Behälterboden herum sind drei sich zwischen einer oberen und einer unteren Wandungspartie erstreckende Verbindungsstreben 16 angeordnet, die eine Aussteifung des Behälters 10 bewirken und dabei von innen oder außen auf die Behälterwandung 14 wirkende Druckkräfte aufnehmen.

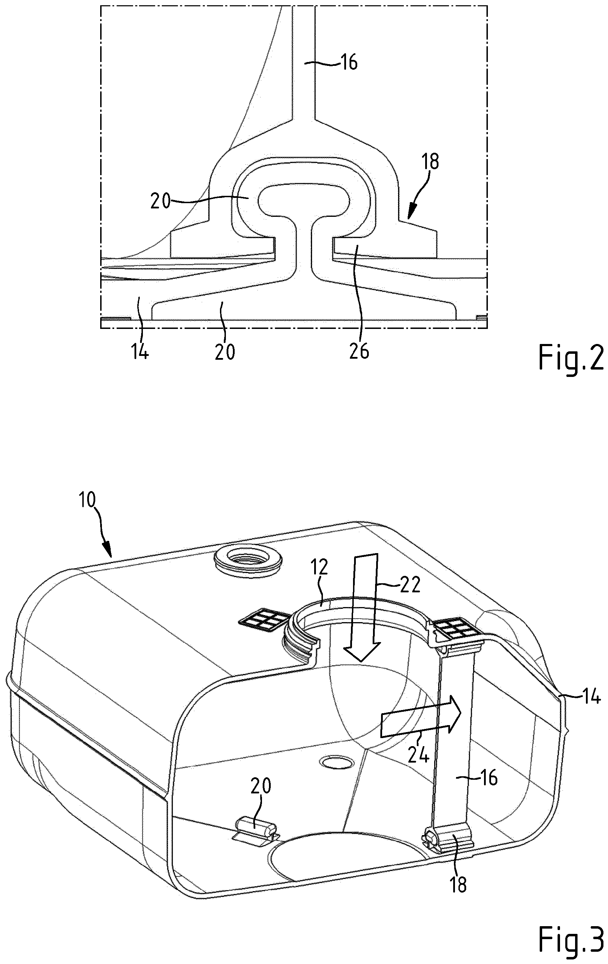

Fig. 2 zeigt eine Detailansicht des Befestigungsbereichs der Verbindungsstrebe 16 an der Behälterwandung 14. Die Verbindungsstrebe 16 weist zu diesem Zweck an ihren Endbereichen jeweils eine Profilpartie 18 auf, die eine dazu komplementäre Profilpartie 20 der Behälterwandung 14 übergreift. Die Profilpartien 18 können je nach Anwendungserfordernis gleichartig oder in ihren Abmessungen unterschiedlich ausgebildet sein. Die komplementäre Profilpartie 20 der Behälterwandung 14 wird durch ein Einlegeteil 40 hergestellt, dass vor der Formung des Behälters 10 in einer Blasform in dieser angeordnet wurde und dann beim Formen der Behälterkonturen von dem Wandungsmaterial teilweise umschlossen wird.

Fig. 3 zeigt einen Querschnitt des Behälters 10 im Bereich der Öffnung 12. Die Verbindungsstrebe 16 wird zu ihrer Montage im Behälter durch die Öffnung 12 in den Innenraum des Behälters 10 eingeführt (Pfeil 22) und dann seitlich derart verschoben (Pfeil 24), dass die Profilpartie 18 der Verbindungsstrebe 16 auf die komplementäre Profilpartie 20 der Behälterwandung 14 aufgeschoben wird und diese übergreift. Durch den Formschluss zwischen der Profilpartie 18 der Verbindungsstrebe 16 und der komplementären Profilpartie 20 der Behälterwandung 14 können in Längserstreckungsrichtung der Verbindungsstrebe 16, also in Verbindungsrichtung zwischen den einander gegenüberliegenden, die komplementären Profilpartien 20 tragenden Wandpartien der Behälterwandung 14, von innen oder außen auf die Behälterwandung wirkende Kräfte 14 als Zug- und Druckkräfte von der Verbindungsstrebe 16 aufgenommen werden. Zur besseren Aufnahme von auf die Verbindungsstrebe 16 wirkende Druckkräfte weist die Profilpartie 18 verbreiterte Fußpartien 26 (Fig. 2) auf, die sich an der Innenseite der Behälterwandung 14 abstützen können.

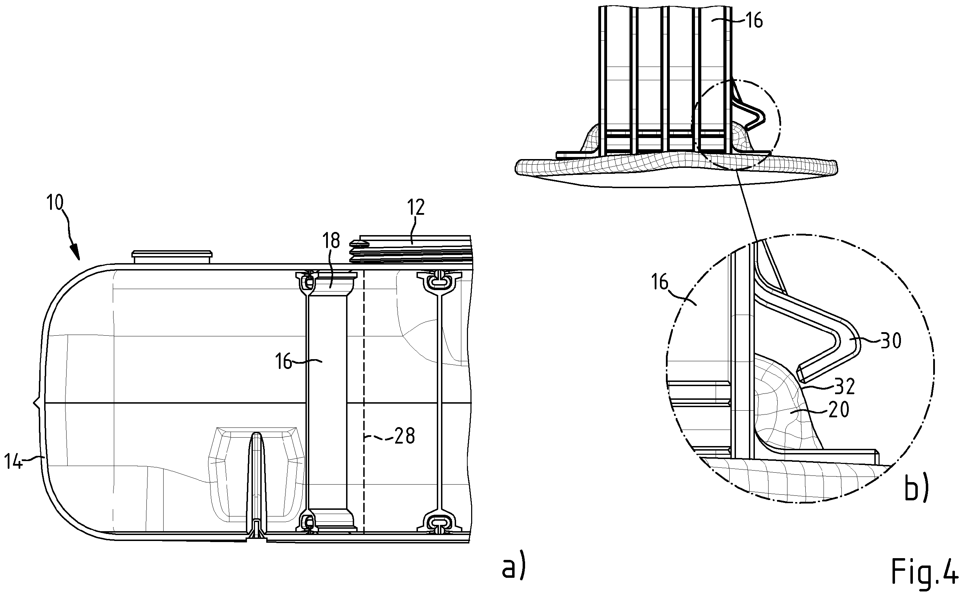

In Fig. 4 sind zwei Möglichkeiten einer Sicherung der Verbindungsstrebe 16 gegen ungewolltes Lösen von der komplementären Profilpartie 20 dargestellt. In Fig. 4a sind die komplementären Profilpartien 20 der Behälterwandung 14 in unmittelbarer Nähe zu einem nach der Montage der Verbindungsstrebe 16 in den Behälter 10 eingebauten Kraftstofffördermoduls angeordnet, dessen Umfangsfläche durch die gestrichelte Linie 28 dargestellt sei. Durch die Nähe der Verbindungsstrebe 16 zu dem Kraftstofffördermodul wird eine Verschiebung der Verbindungsstrebe 16 in dessen Richtung blockiert und die Befestigung der Verbindungsstrebe 16 dadurch gesichert. Zu einer Entfernung der Verbindungsstrebe 16 müsste zunächst das Kraftstofffördermodul aus dem Behälter 10 entfernt werden, was für die Zugänglichkeit der Verbindungsstrebe 16 ohnehin erforderlich wäre. Bei der Variante der Fig. 4b weist die Profilpartie 18 der Verbindungsstrebe 16 eine Blattfeder 30 auf, die bei vollständig auf die komplementäre Profilpartie 20 der Behälterwandung 14 aufgeschobener Profilpartie 18 der Verbindungsstrebe 16 gegen eine Hinterkante 32 der komplementären Profilpartie 20 rastet.

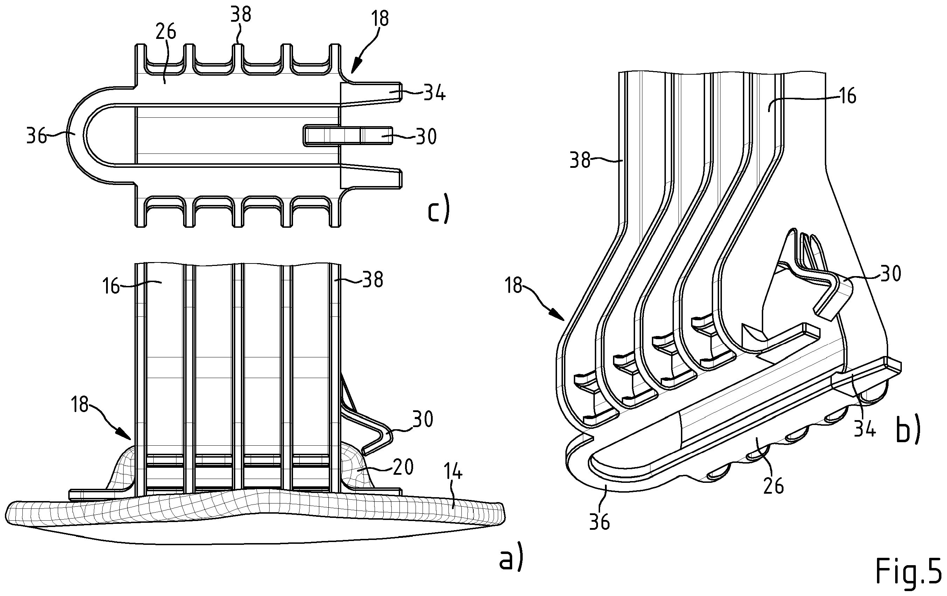

Fig. 5 zeigt detaillierte Ansichten der Profilpartie 18 der Verbindungsstrebe 16. In Fig. 5a ist die Profilpartie 18 der Verbindungsstrebe 16 auf der komplementären Profilpartie 20 der Behälterwandung 14 montiert dargestellt. Das Positionieren beim Aufschieben der Profilpartie 18 auf die komplementäre Profilpartie 20 wird durch eine Auflaufschräge 34 erleichtert. Dieser am anderen Ende der Profilöffnung gegenüberliegend ist ein Anschlag 36 vorgesehen, der verhindert, dass die Profilpartie 18 über die gewollte Montageendlage hinaus über die komplementäre Profilpartie 20 geschoben wird. Die Verbindungsstrebe 16 ist im Wesentlichen als sich zwischen den endseitigen Profilpartien 18 erstreckender Flachkörper ausgebildet. Um insbesondere Druckkräfte besser aufnehmen zu können, weist die Verbindungsstrebe 16 eine Mehrzahl von Versteifungsrippen 38 auf, die sich zweckmäßig über die gesamte Länge der Verbindungsstrebe 16 erstrecken, also auch den Bereich der Profilpartie 18 erfassen.

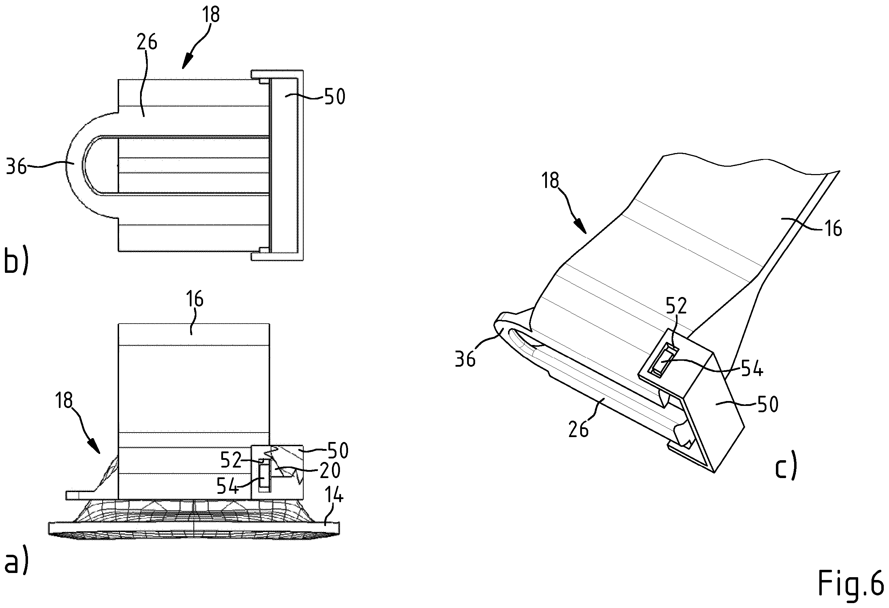

In Fig. 6 ist der Bereich der Profilpartie 18 der Verbindungsstrebe 16 in verschiedenen Ansichten dargestellt. Es ist ein Sicherungselement für die Verbindungsstrebe 16 vorgesehen, dass als Sicherungsbügel 50 ausgebildet ist. Der Sicherungsbügel 50 übergreift die Profilöffnung der Profilpartie 18 und weist zwei seitliche Einrastöffnungen 52 auf. Er wird nach dem Einbau der Verbindungsstrebe 16 auf komplementäre Rastnasen 54 an den Seitenflächen der Profilpartie 18 aufgerastet.

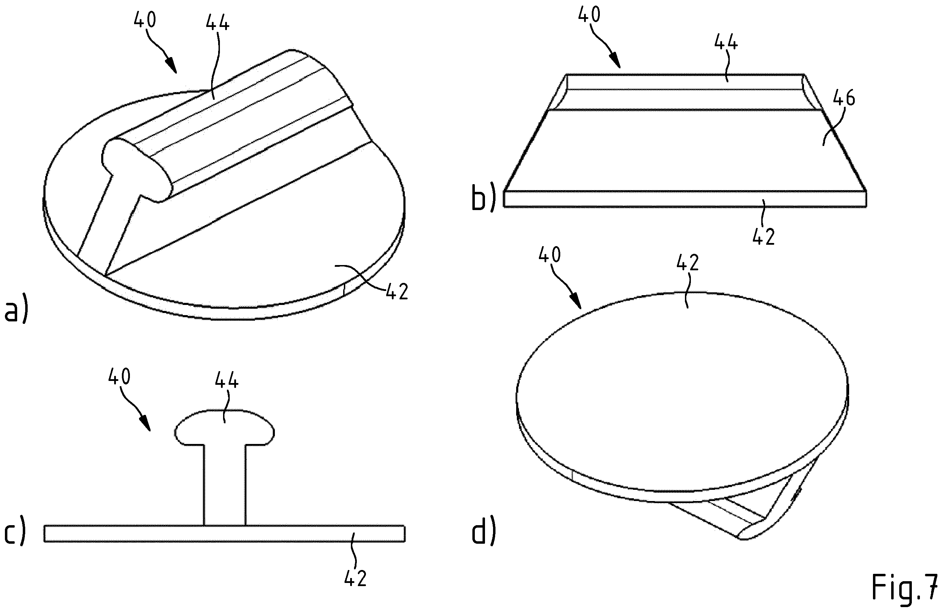

In Fig. 7 sind verschiedene Ansichten des Einlegeteils 40 dargestellt. Das Einlegeteil 40 weist eine flache Tellerpartie 42 und eine davon im Wesentlichen senkrecht abstehende Profilformungspartie 44 auf, die im Querschnitt etwa pilzförmig ausgebildet ist, um derart die Formgebung der Hinterschnittpartie der komplementären Profilpartie 20 zu ermöglichen. In einem stegartigen Verbindungsbereich der Profilformungspartie 44 mit der Tellerpartie 42 sind Durchbrechungen 46 vorgesehen, die für einen zusätzlichen Formschluss beim Überformen des Einlegeteils 40 durch das Material der Behälterwandung 14 sorgen.

Zusammenfassend ist folgendes festzuhalten: Die Erfindung betrifft einen Kraftstoffbehälter 10 mit einer mindestens zwei einander gegenüberliegende Wandpartien aufweisenden Behälterwandung 14 und einer zwischen den zwei einander gegenüberliegenden Wandpartien angeordneten Versteifungseinrichtung. Die Erfindung betrifft weiterhin ein Verfahren zur Herstellung eines derartigen Kraftstoffbehälters. Gemäß der Erfindung ist vorgesehen, dass die Versteifungseinrichtung mindestens eine Verbindungsstrebe 16 aufweist, die endseitig jeweils eine Profilpartie 18 aufweist, die mit je einer komplementären Profilpartie 20 an den zwei einander gegenüberliegenden Wandpartien der Behälterwandung 14 derart zugfest im Eingriff stehen, dass die Verbindungsstrebe 16 auf die Behälterwandung 14 wirkende Druckkräfte aufnimmt. Das erfindungsgemäße Verfahren zur Herstellung eines Kraftstoffbehälters 10 mit einer Versteifungseinrichtung der vorgenannten Art ist gekennzeichnet durch die folgenden Schritte: Formen des Behälters 10 aus einem thermoplastischen Kunststoff in einer Blasform, wobei mindestens zwei Koppelpartien an einander gegenüberliegenden Wandpartien sowie eine Öffnung 12 in einer der Wandpartien geschaffen werden; Entfernen des Behälters 10 aus der Blasform; manuelles oder maschinelles Einführen mindestens einer Verbindungsstrebe 16 über die Öffnung 12 in einen Innenraum des Behälters 10, wobei die mindestens eine Verbindungsstrebe 16 endseitig jeweils eine Profilpartie 18 aufweist, die zugfest mit einer der Koppelpartien der Wandpartien koppelbar ist; und manuelles oder maschinelles Koppeln der Profilpartien 18 der Verbindungsstrebe 16 mit den Koppelpartien der Wandpartien.

## Patentansprüche

1. Kraftstoffbehälter (10) mit einer mindestens zwei einander gegenüberliegende Wandpartien aufweisenden Behälterwandung (14) und einer zwischen den zwei einander gegenüberliegenden Wandpartien angeordneten Versteifungseinrichtung, **dadurch gekennzeichnet, dass** die Versteifungseinrichtung mindestens eine Verbindungsstrebe (16) aufweist, die endseitig jeweils eine Profilpartie (18) aufweist, die mit je einer komplementären Profilpartie (20) an den zwei einander gegenüberliegenden Wandpartien der Behälterwandung (14) derart zugfest im Eingriff stehen, dass die Verbindungsstrebe (16) auf die Behälterwandung (14) wirkende Druckkräfte aufnimmt, wobei die komplementären Profilpartien (20) der zwei gegenüberliegenden Wandpartien der Behälterwandung (14) einen Hinterschnittbereich aufweisen und wobei Koppelpartien der Wandpartien eine Hinterschnittpartie aufweisen, derart dass die Profilpartien (18) der mindestens einen Verbindungsstrebe (16) quer zur Längserstreckung der Verbindungsstrebe (16) auf die Hinterschnittpartien aufschiebbar sind.

2. Kraftstoffbehälter (10) nach Anspruch 1, **dadurch gekennzeichnet, dass** die Hinterschnittpartie bei einer Formung der einander gegenüberliegenden Wandpartien durch ein formgebendes Element von einer Behälteraußenseite her geschaffen ist.

3. Kraftstoffbehälter (10) nach Anspruch 2, **dadurch gekennzeichnet, dass** die Behälterwandung aus einem thermoplastischen Kunststoff besteht und dass das formgebende Element ein Einlegeteil (40) für eine Blasform zur Herstellung des Behälters ist, das bei einem Blasformen des Behälters von der jeweiligen Wandpartie überblasen ist.

4. Kraftstoffbehälter (10) nach Anspruch 3, **dadurch gekennzeichnet, dass** das Einlegeteil (40) eine flache Tellerpartie (42) und eine sich normal zu der Tellerpartie (40) erstreckende, im Querschnitt im Wesentlichen pilzförmige Profilformungspartie (44) aufweist.

5. Kraftstoffbehälter (10) nach Anspruch 4, **dadurch gekennzeichnet, dass** die Profilformungspartie (44) eine Höhe zwischen 20 mm und 120 mm aufweist.

6. Kraftstoffbehälter (10) nach einem der Ansprüche 1 bis 5, **dadurch gekennzeichnet, dass** die endseitigen Profilpartien (18) der mindestens einen Verbindungsstrebe (16) Führungselemente aufweisen, die ein Aufschieben der Profilpartien (18) auf die komplementären Profilpartien (20) der einander gegenüberliegenden Wandpartien der Behälterwandung (14) erleichtern.

7. Kraftstoffbehälter (10) nach einem der Ansprüche 1 bis 6, **dadurch gekennzeichnet, dass** die endseitigen Profilpartien (18) der mindestens einen Verbindungsstrebe (16) Anschlagelemente (36) aufweisen, die ein Aufschieben der Profilpartien (18) auf die komplementären Profilpartien (20) der einander gegenüberliegenden Wandpartien der Behälterwandung (14) einseitig begrenzen.

8. Kraftstoffbehälter (10) nach einem der Ansprüche 1 bis 7, **dadurch gekennzeichnet, dass** die endseitigen Profilpartien (18) der mindestens einen Verbindungsstrebe (16) ein vorzugsweise lösbares Sicherungselement (30, 50) aufweisen, das ein Entfernen der Profilpartien (18) von den komplementären Profilpartien (20) der einander gegenüberliegenden Wandpartien der Behälterwandung (14) verhindert.

9. Kraftstoffbehälter (10) nach Anspruch 8, **dadurch gekennzeichnet, dass** das Sicherungselement als Seitenpartien der Profilpartie (18) übergreifender und auf diese aufrastbarer Sicherungsbügel (50) ausgebildet ist.

10. Kraftstoffbehälter (10) nach einem der Ansprüche 1 bis 9, **dadurch gekennzeichnet, dass** die mindestens eine Verbindungsstrebe (16) einen sich zwischen den endseitigen Profilpartien (18) erstreckenden Flachkörper mit einer Wandstärke von 2 mm bis 20 mm aufweist, der vorzugsweise mit einer Mehrzahl von sich quer zu seiner Flachseite bis über die Profilpartien (18) erstreckenden Versteifungsrippen (38) versehen ist.

11. Kraftstoffbehälter (10) nach einem der Ansprüche 1 bis 10, **dadurch gekennzeichnet, dass** der Behälter im Bereich einer der einander gegenüberliegenden Wandpartien eine Öffnung (12) aufweist und dass die komplementären Profilpartien (20) in einem geringen Abstand von der Öffnung (12) einerseits und von einem auf die gegenüberliegende Wandpartie projizierten Öffnungsumriss andererseits angeordnet sind.

12. Kraftstoffbehälter (10) nach Anspruch 11, **dadurch gekennzeichnet, dass** der Abstand weniger als 100 mm, vorzugsweise weniger als 50 mm beträgt.

13. Kraftstoffbehälter (10) nach Anspruch 11 oder 12, **dadurch gekennzeichnet, dass** eine Mehrzahl von Verbindungsstreben (16) in gleichen oder ungleichen Winkelabständen zueinander um die Öffnung (12) herum angeordnet sind.

14. Verfahren zur Herstellung eines Kraftstoffbehälters (10) nach einem der Ansprüche 1 bis 13, **gekennzeichnet durch** die folgenden Schritte:
- Formen des Behälters aus einem thermoplastischen Kunststoff in einer Blasform, wobei mindestens zwei Koppelpartien an einander gegenüberliegenden Wandpartien sowie eine Öffnung in einer der Wandpartien geschaffen werden,
- Entfernen des Behälters (10) aus der Blasform,
- manuelles oder maschinelles Einführen mindestens einer Verbindungsstrebe (16) über die Öffnung (12) in einen Innenraum des Behälters (10), wobei die mindestens eine Verbindungsstrebe (16) endseitig jeweils eine Profilpartie (18) aufweist, die zugfest mit einer der Koppelpartien der Wandpartien koppelbar ist, und
- manuelles oder maschinelles Koppeln der Profilpartien (18) der Verbindungsstrebe (16) mit den Koppelpartien der Wandpartien, wobei die Koppelpartien der Wandpartien eine Hinterschnittpartie aufweisen und die Profilpartien (18) der mindestens einen Verbindungsstrebe (16) quer zur Längserstreckung der Verbindungsstrebe (16) auf die Hinterschnittpartien aufgeschoben werden.

## Claims

1. Fuel tank (10) comprising a tank wall (14) that has at least two mutually opposite wall parts, and a stiffening device arranged between the two mutually opposite wall parts, **characterized in that** the stiffening device comprises at least one connecting strut (16) which has a profile part (18) at each end, which profile parts are rigidly engaged with a complementary profile part (20) at the two mutually opposite wall parts of the tank wall (14) so that the connecting strut (16) absorbs compression forces acting on the tank wall (14), the complementary profile parts (20) of the two opposite wall parts of the tank wall (14) having an undercut region and coupling parts of the wall parts having an undercut region so that the profile parts (18) of the at least one connecting strut (16) can be pushed onto the undercuts transversely to the longitudinal extension of the connecting strut (16).

2. Fuel tank (10) according to claim 1, **characterized in that** the undercut part is created when the mutually opposite wall parts are shaped by a shaping element from the outside of the tank.

3. Fuel tank (10) according to claim 2, **characterized in that** the tank wall consists of a thermoplastic material and that the shaping element is an insert (40) for a blow mold for producing the tank, which insert is overblown by the respective wall part when the tank is blow-moulded.

4. Fuel tank (10) according to claim 3, **characterized in that** the insert (40) has a flat plate part (42) and a profile forming part (44) which is substantially mushroom-shaped in cross section and extends normally with respect to the plate part (40).

5. Fuel tank (10) according to claim 4, **characterized in that** the profile forming part (44) has a height of between 20 mm and 120 mm.

6. Fuel tank (10) according to any of claims 1 to 5, **characterized in that** the profile parts (18) at the end of the at least one connecting strut (16) have guide elements which allow the profile parts (18) to be pushed onto the complementary profile parts (20) of the mutually opposite wall parts of the tank wall (14).

7. Fuel tank (10) according to any of claims 1 to 6, **characterized in that** the profile parts (18) at the end of the at least one connecting strut (16) have stop elements (36) which restrict, on one side, the profile parts (18) from being pushed onto the complementary profile parts (20) of the mutually opposite wall parts of the tank wall (14).

8. Fuel tank (10) according to any of claims 1 to 7, **characterized in that** the profile parts (18) at the end of the at least one connecting strut (16) have a preferably detachable securing element (30, 50) which prevents removal of the profile parts (18) from the complementary profile parts (20) of the mutually opposite wall parts of the tank wall (14).

9. Fuel tank (10) according to claim 8, **characterized in that** the securing element is designed as a securing clip (50) which overlaps side parts of the profile part (18) and can be snapped thereon.

10. Fuel tank (10) according to any of claims 1 to 9, **characterized in that** the at least one connecting strut (16) has a flat body which extends between the end-side profile parts (18) and has a wall thickness of 2 mm to 20 mm and is preferably provided with a plurality of stiffening ribs (38) extending transversely to its flat side as far as the profile parts (18).

11. Fuel tank (10) according to any of claims 1 to 10, **characterized in that** the tank has an opening (12) in the region of one of the mutually opposite wall parts and **in that** the complementary profile parts (20) are arranged at a small distance from both the opening (12) and an opening outline projected onto the opposite wall part.

12. Fuel tank (10) according to claim 11, **characterized in that** the distance is less than 100 mm, preferably less than 50 mm.

13. Fuel tank (10) according to claim 11 or 12, **characterized in that** a plurality of connecting struts (16) are arranged at equal or unequal angular distances from one another around the opening (12).

14. Method for producing a fuel tank (10) according to any of claims 1 to 13, **characterized by** the following steps:
- shaping the tank from a thermoplastic material in a blow mold, at least two coupling parts being created on mutually opposite wall parts and an opening being created in one of the wall parts,
- removing the tank (10) from the blow mold,
- manually or mechanically inserting at least one connecting strut (16) via the opening (12) into an interior of the tank (10), the at least one connecting strut (16) having in each case a profile part (18) at the end, which profile part can be rigidly coupled to one of the coupling parts of the wall parts, and
- manually or mechanically coupling the profile parts (18) of the connecting strut (16) to the coupling parts of the wall parts, the coupling parts of the wall parts having an undercut part and the profile parts (18) of the at least one connecting strut (16) being pushed onto the undercut parts transversely to the longitudinal extension of the connecting strut (16).

## Revendications

1. Réservoir de carburant (10) comportant une paroi de réservoir (14) comportant au moins deux parties de paroi opposées l'une à l'autre et un dispositif de raidissement disposé entre les deux parties de paroi opposées l'une à l'autre, **caractérisé en ce que** le dispositif de raidissement comporte au moins une entretoise de liaison (16), laquelle comporte respectivement une partie profilée (18) aux extrémités, laquelle vient en prise de manière résistante à la traction avec une partie profilée (20) complémentaire au niveau des deux parties de paroi opposées l'une à l'autre de la paroi de réservoir (14) de telle sorte que l'entretoise de liaison (16) absorbe des forces de compression agissant sur la paroi de réservoir (14), dans lequel les parties profilées (20) complémentaires des deux parties de paroi opposées de la paroi de réservoir (14) comportent une zone de contre-dépouille et des parties d'accouplement des parties de paroi comportent une partie de contre-dépouille de telle sorte que les parties profilées (18) de l'au moins une entretoise de liaison (16) peuvent être poussées transversalement à l'étendue longitudinale de l'entretoise de liaison (16) sur les parties de contre-dépouille.

2. Réservoir de carburant (10) selon la revendication 1, **caractérisé en ce que** la partie de contre-dépouille est créée lors d'un moulage des parties de paroi opposées l'une à l'autre par un élément de moulage depuis un côté externe de réservoir.

3. Réservoir de carburant (10) selon la revendication 2, **caractérisé en ce que** la paroi de réservoir est constituée d'un matériau thermoplastique et **en ce que** l'élément de moulage est une pièce d'insertion (40) pour un moule de soufflage destinée à la fabrication du réservoir, laquelle pièce d'insertion étant sursoufflée par la partie de paroi respective lorsque le réservoir est moulé par soufflage.

4. Réservoir de carburant (10) selon la revendication 3, **caractérisé en ce que** la pièce d'insertion (40) comporte une partie de plaque (42) plate et une partie de moulage du profilé (44), s'étendant perpendiculairement à la partie de plaque (40), sensiblement en forme de champignon dans la section transversale.

5. Réservoir de carburant (10) selon la revendication 4, **caractérisé en ce que** la partie de moulage du profilé (44) présente une hauteur comprise entre 20 mm et 120 mm.

6. Réservoir de carburant (10) selon l'une quelconque des revendications 1 à 5, **caractérisé en ce que** les pièces profilées (18) aux extrémités de l'au moins une entretoise de liaison (16) comportent des éléments de guidage, lesquels facilitent une poussée des parties profilées (18) sur les parties profilées (20) complémentaires des parties de paroi opposées l'une à l'autre de la paroi de réservoir (14).

7. Réservoir de carburant (10) selon l'une quelconque des revendications 1 à 6, **caractérisé en ce que** les pièces profilées (18) aux extrémités de l'au moins une entretoise de liaison (16) comportent des éléments de butée (36), lesquels délimitent d'un côté une poussée des parties profilées (18) sur les parties profilées (20) complémentaires des parties de paroi opposées l'une à l'autre de la paroi de réservoir (14).

8. Réservoir de carburant (10) selon l'une quelconque des revendications 1 à 7, **caractérisé en ce que** les parties profilées (18) aux extrémités de l'au moins une entretoise de liaison (16) comportent un élément de fixation (30, 50), de préférence amovible, lequel empêche un enlèvement des parties profilées (18) des parties profilées (20) complémentaires des parties de paroi opposées l'une à l'autre de la paroi de réservoir (14).

9. Réservoir de carburant (10) selon la revendication 8, **caractérisé en ce que** l'élément de fixation est réalisé en tant qu'étrier de fixation (50), lequel chevauche des parties latérales de la partie profilée (18) et peut être encliqueté sur celle-ci.

10. Réservoir de carburant (10) selon l'une quelconque des revendications 1 à 9, **caractérisé en ce que** l'au moins une entretoise de liaison (16) comporte un corps plat s'étendant entre les parties profilées (18) aux extrémités, présentant une épaisseur de paroi de 2 mm à 20 mm, lequel est de préférence pourvu d'une pluralité de nervures de raidissement (38) s'étendant transversalement à son côté plat jusqu'aux parties profilées (18).

11. Réservoir de carburant (10) selon l'une quelconque des revendications 1 à 10, **caractérisé en ce que** le réservoir comporte une ouverture (12) dans la zone de l'une des parties de paroi opposées l'une à l'autre et que les parties profilées (20) complémentaires sont disposées à faible distance de l'ouverture (12) d'une part et d'un contour d'ouverture projeté sur la partie de paroi opposée d'autre part.

12. Réservoir de carburant (10) selon la revendication 11, **caractérisé en ce que** la distance est inférieure à 100 mm, de préférence inférieure à 50 mm.

13. Réservoir de carburant (10) selon la revendication 11 ou 12, **caractérisé en ce qu'**une pluralité d'entretoises de liaison (16) sont disposées à des distances angulaires égales ou inégales les unes par rapport aux autres autour de l'ouverture (12).

14. Procédé de fabrication d'un réservoir de carburant (10) selon l'une quelconque des revendications 1 à 13, **caractérisé par** les étapes suivantes :
- le moulage du réservoir à partir d'un matériau thermoplastique dans un moule de soufflage, dans lequel au moins deux parties d'accouplement sur des parties de paroi opposées l'une à l'autre, ainsi qu'une ouverture dans l'une des parties de paroi sont créées,
- l'enlèvement du réservoir (10) hors du moule de soufflage,
- l'insertion manuelle ou mécanique de l'au moins une entretoise de liaison (16) par l'intermédiaire de l'ouverture (12) dans un espace intérieur du réservoir (10), dans lequel l'au moins une entretoise de liaison (16) comporte respectivement une partie profilée (18) aux extrémités pouvant être couplée de manière résistante à la traction à l'une des parties d'accouplement des parties de paroi, et
- l'accouplement manuel ou mécanique des parties profilées (18) de l'entretoise de liaison (16) aux parties d'accouplement des parties de paroi, dans lequel les parties d'accouplement des parties de paroi comportent une partie de contre-dépouille et les parties profilées (18) de l'au moins une entretoise de liaison (16) sont poussées transversalement à l'extension longitudinale de l'entretoise de liaison (16) sur les parties de contre-dépouille.
